# EUROPEAN PATENT SPECIFICATION

(11) **EP 1 498 593 B1**
(45) Date of publication and mention of the grant of the patent: **21.04.2010**
(21) Application number: 04254229.0
(22) Date of filing: 14.07.2004
(51) Int. Cl.: F02B 67/04, F16F 15/26

(54) **Engine secondary balancer system**
Brennkraftmaschine mit Sekundärbalancierungsmechanismus
Moteur à combustion interne avec un mécanisme de balancement secondaire

(30) Priority: 14.07.2003 JP 2003274066
(43) Date of publication of application: 19.01.2005
(73) Proprietor: HONDA MOTOR CO., LTD., Tokyo (JP)
(72) Inventor: Endo, Yusuke c/oHonda R&D Co., Ltd., Saitama (JP)
(74) Representative: Piésold, Alexander James

(56) References cited:
- EP-A- 1 304 450
- US-B1- 6 189 499

## Description

The present invention relates to an engine secondary balancer system in which a balancer housing connected to a crankcase and accommodated in an oil pan comprises upper and lower housings which are connected to each other, a pair of balance shafts each having an axis parallel to a crankshaft and interlocked with and connected to each other is rotationally supported between the upper and lower housings, an endless transmission belt for transmitting rotational power from the crankshaft is wound around a driven wheel fixed to an end portion of one of the pair of balance shafts, and a tensioner body of a hydraulic tensioner for imparting a tension to the transmission belt is attached to the balancer housing.

A secondary balancer system has already been known in, for example, JP-A-2003-129814 in which a pair of balance shafts each having an axis parallel to a crankshaft and interlocked with and connected to each other is rotationally supported between upper and lower housings which are connected to each other so as to constitute a balancer housing accommodated in an oil pan and an endless transmission belt for transmitting rotational power from the crankshaft is wound around a driven wheel fixed to an end portion of one of the pair of balance shafts.

Incidentally, there occurs a case where a hydraulic tensioner is attached to the balancer housing in order to impart a tension to a slack side of the transmission belt such as a chain or belt. On the other hand, in order to lubricate parts needing lubrication between the upper and lower housings which constitute the balancer housing and the pair of balance shafts, a lubricating oil passageway is provided in the balancer housing for introducing an oil from the crankcase side to the lubrication needingparts, and in the conventional secondarybalancer system in which the hydraulic tensioner is attached to the balancer housing, an oil passageway for introducing the oil to the tensioner side is provided in the balancer housing in such a manner as to be branched from the lubricating oil passageway.

In order to secure the stable operation of the hydraulic tensioner, an oil is needed which is pressurized substantially equally to that in a main gallery. In case, however, the amount of oil that leaks from the lubrication needing parts between the balancer housing and the pair of balance shafts increases, it becomes difficult to secure the oil pressure needed on the tensioner side. Moreover, no such highly pressurized oil is needed at the lubrication needing parts.

The present invention was made in view of the situations, and an obj ect thereof is to provide an engine secondary balancer system which can secure stably an oil pressure needed by a hydraulic tensioner while lubricating lubrication needing parts between a balancer housing and a pair of balance shafts.

EP-A-1304450 discloses an engine secondary balance system of the type of the pre-characterising portion of claim 1.

US-B1-6189499 discloses a balancing device having a chain tensioner, wherein an orifice is between an oil pump and the cylinder bore of the tensioner, with the oil supply to the balancer shafts being taken from a point between the oil pump and the orifice.

The invention provides an engine secondary balancer system, comprising: a balancer housing connected to a crankcase and accommodated in an oil pan, the balancer housing including upper and lower housings connected to each other; a pair of balance shafts each having an axis parallel to a crankshaft, the pair of balance shafts interlocked with and connected to each other, being rotationally supported between the upper and lower housings, one of the pair of balance shafts having a driven wheel fixed to an end portion thereof; an endless transmission belt for transmitting rotational power from the crankshaft, being wound around the driven wheel; and a hydraulic tensioner for imparting a tension to the transmission belt; wherein the balancer housing is provided with a lubricating oil passageway for introducing an oil between the upper and lower housings and the pair of balance shafts, and a tensioner oil passageway for introducing an oil to the hydraulic tensioner; and the lubricating oil passageway is provided so as to' communicate with an oil supply passageway provided in the crankcase via a communicating oil passageway provided with an orifice therein; characterised in that: the hydraulic tensioner comprises a tensioner body attached to the balancer housing; and, the tensioner oil passageway is provided so as to communicate with the oil supply passageway at a position upstream of the orifice via an oil passageway and a common groove which is branched from the communicating oil passageway.

Preferably, a common oil groove communicating with the oil supply passageway is provided in one of connecting surfaces of the crankcase and the upper housing connected to the crankcase. A lubricating oil passageway forming oil groove for forming a part of the lubricating oil passageway between the upper and lower housings is provided in at least one of connecting surfaces of the upper and lower housings. A communicating oil passageway is provided in the upper housing which connects one end of the common oil groove and the lubricating oil passageway forming oil groove and along which the orifice is interposed. The tensioner oil passageway is provided in the balancer housing so as to continue to the other end of the common oil groove.

According to the first aspect of the invention, since the oil that is restricted by the orifice is supplied to the lubrication needing parts between the upper and lower housings and the pair of balance shafts and the oil is supplied to the hydraulic tensioner via the tensioner oil passageway which is branched at the position upstream of the orifice, the effect of a change in the amount of oil consumed on the lubrication needing parts side is prevented from being imposed on the hydraulic tensioner side and the oil that is pressurized substantially equally to that in the main gallery is allowed to be supplied to the hydraulic tensioner at all times, thereby making it possible to secure the stable operation of the hydraulic tensioner.

In addition, according to the second aspect of the invention, the lubricating oil passageway that is connected to the oil supply passageway in the crankcase via the orifice and the oil passageway construction in which the tensioner oil passageway is allowed to communicate with the oil supply passageway at the position upstream of the orifice can easily be completed by connecting the upper and lower housings together.

Preferred embodiments of the present invention will now be described by way of example only and with reference to the accompanying drawings in which:
Fig. 1 is a side view of an engine showing a side thereof as viewed from an axial end of a crankshaft.
Fig. 2 is an enlarged cross-sectional view taken along the line 2-2 in Fig. 1.
Fig. 3 is an enlarged view of a portion in Fig. 1 which is indicated by an arrow 3.
Fig. 4 is an enlarged cross-sectional view taken along the line 4-4 in Fig. 2.
Fig. 5 is a cross-sectional view taken along the line 5-5 in Fig. 3.
Fig. 6 is a cross-sectional view taken along the line 6-6 in Fig. 3.
Fig. 7 is a cross-sectional view taken along the line 7-7 in Fig. 6.
Fig. 8 is a cross-sectional view taken along the line 8-8 in Fig. 4.

Hereinafter, a mode for carrying out the invention will be described based on an embodiment of the invention that is illustrated in the accompanying drawings.

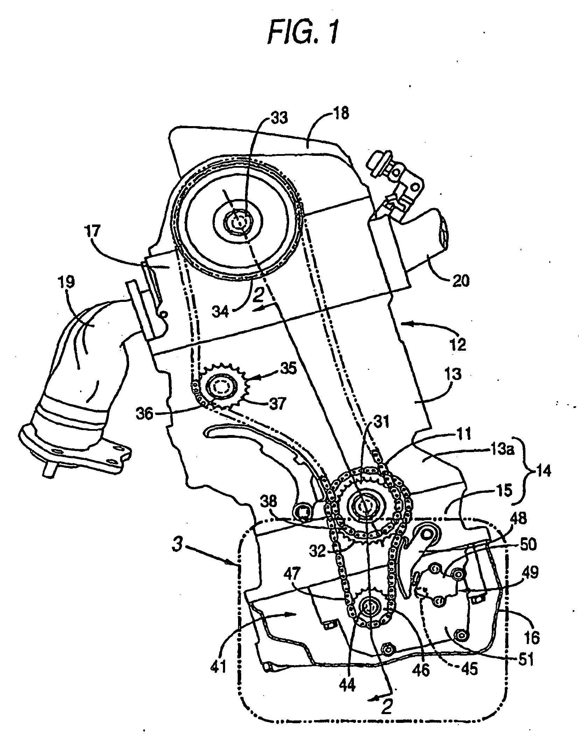

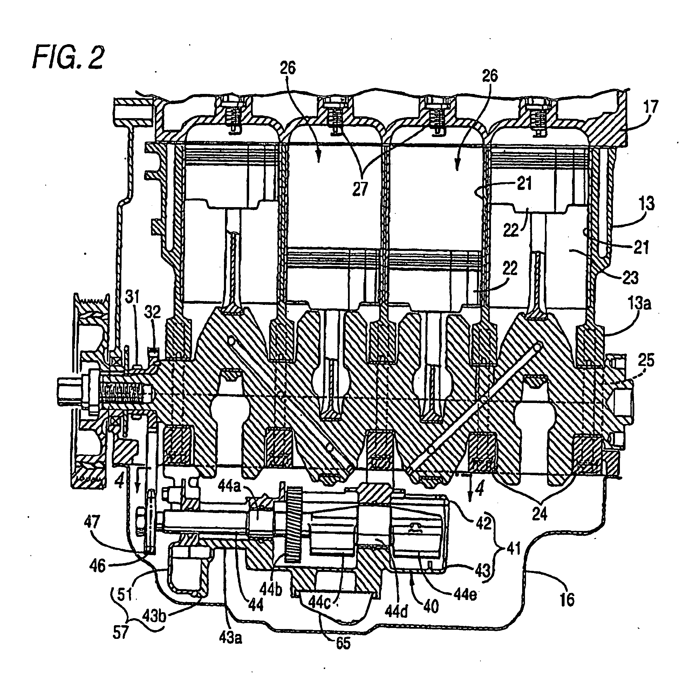

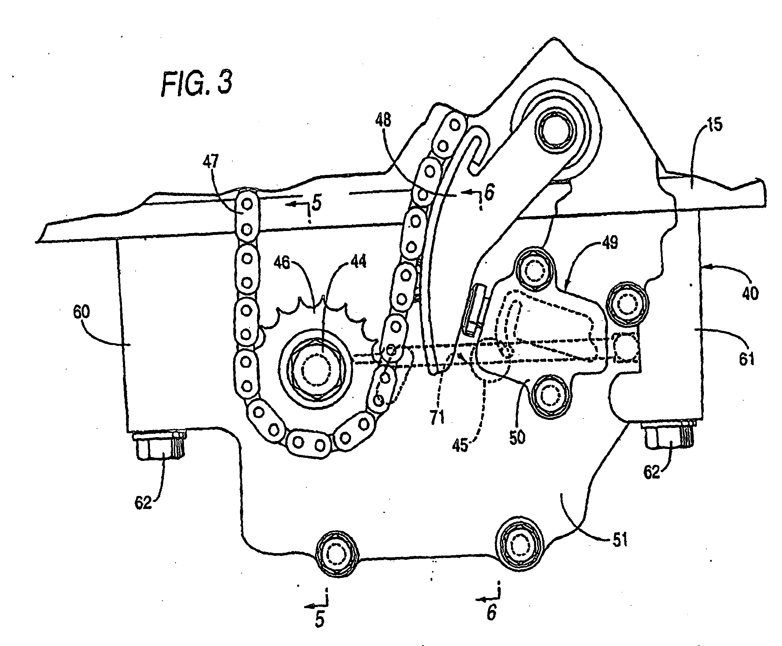

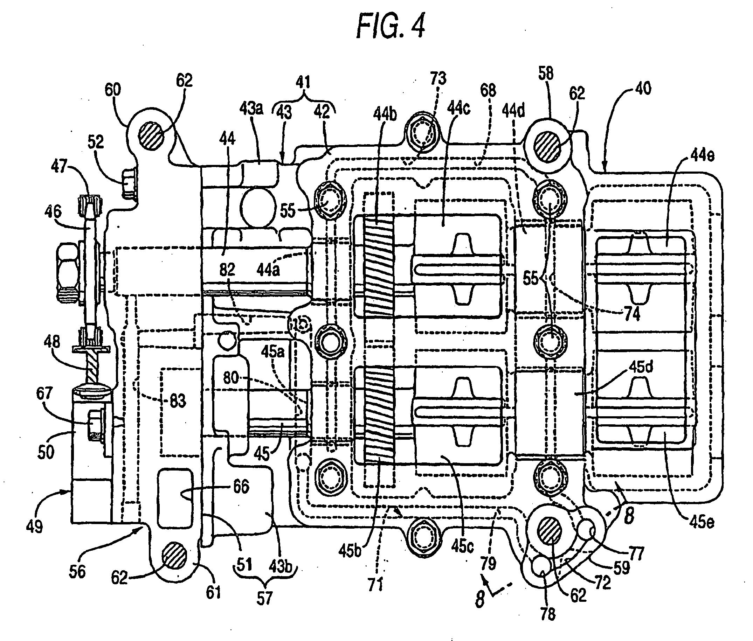

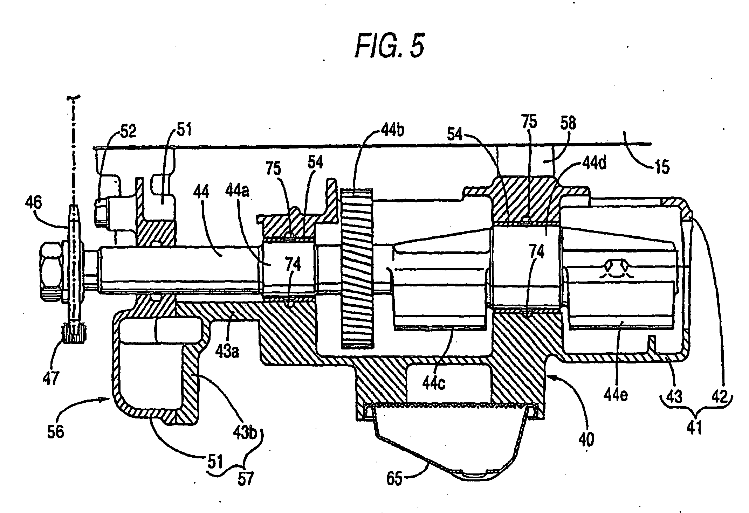

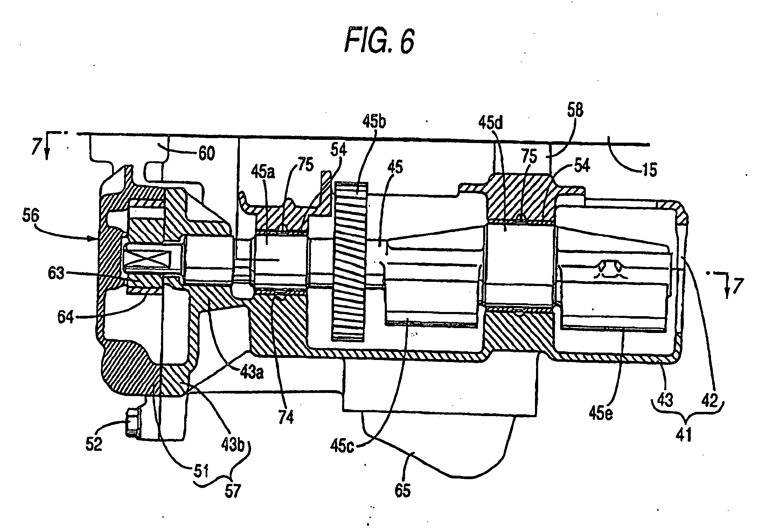

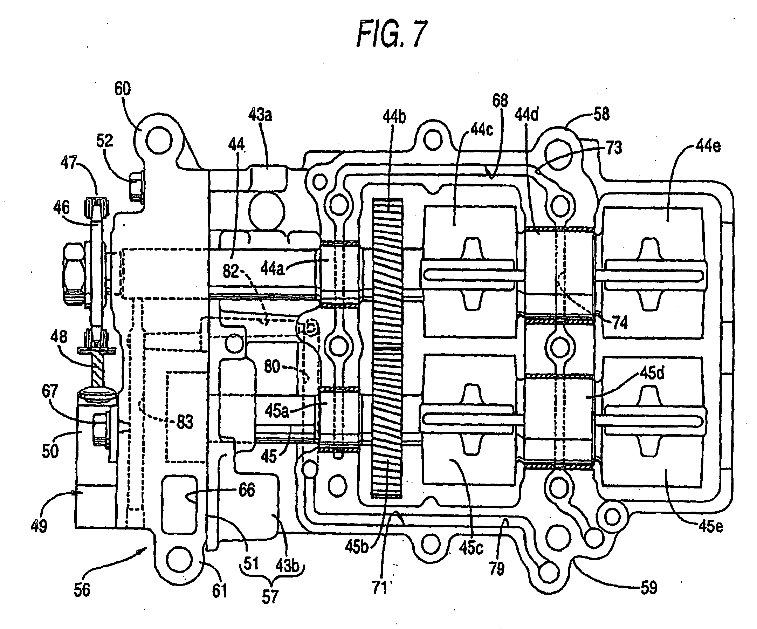

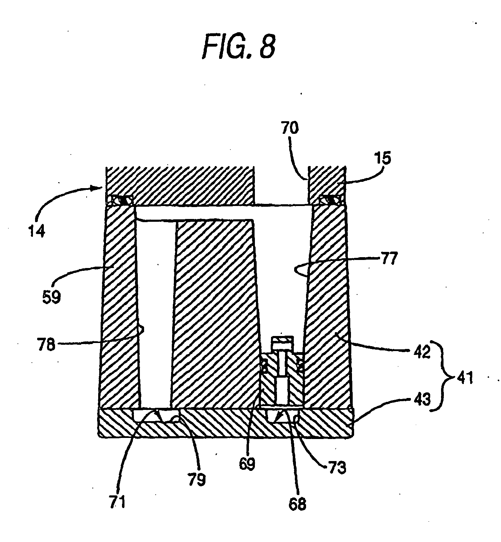

Figs. 1 to 8 illustrate an embodiment of the invention, in which Fig. 1 is a side view of an engine showing a side thereof as viewed from an axial end of a crankshaft, Fig. 2 is an enlarged cross-sectional view taken along the line 2-2 in Fig. 1, Fig. 3 is an enlarged view of a portion in Fig. 1 which is indicated by an arrow 3, Fig. 4 is an enlarged cross-sectional view taken along the line 4-4 in Fig. 2, Fig. 5 is a cross-sectional view taken along the line 5-5 in Fig. 3, Fig. 6 is a cross-sectional view taken along the line 6-6 in Fig . 3, Fig. 7 is a cross-sectional view taken along the line 7-7 in Fig. 6, and Fig. 8 is a cross-sectional view taken along the line 8-8 in Fig. 4.

First, in Figs. 1 and 2, a multi-cylinder, for example, in-line four-cylinder diesel engine is such as to be installed on an automobile in such a manner that the axis of a crankshaft 11 extends along a transverse direction of a vehicle body and an engine main body 12 thereof includes a cylinder block 13 having a case portion 13a which is made to constitute an integral lower portion thereof, a lower block 15 connected to the lower portion of the cylinder block 13 so as to constitute a crankcase 14 in cooperation with the case portion 13a, an oil pan 16 connected to a lower surface of the lower block 15, a cylinder head 17 connected to an upper portion of the cylinder block 13 in such a manner that an exhaust system 19 is connected to a front side and an induction system 20 is connected to a rear side thereof and a cylinder head cover 18 which is connected to an upper portion of the cylinder head 17.

As shown in Fig. 2, four cylinder bores 21 ... are provided in series in the cylinder block 13, and pistons 22 ... are fitted in the respective cylinder bores 21 ... in such a manner as to slide therein, the respective pistons 22 ... being connected to the crankshaft 11 via connecting rods 23 ... In the case portion 13a of the cylinder block 13, five bearing caps 24 ... which fit in the interior of the lower block 15 are fastened by a pair of bolts 25 ..., respectively, and the crankshaft 11 is rotationally supportedbetween the case portion 13a and the bearing caps 24 ...

Combustion chambers 26 ..., which top portions of the pistons 22 ... are made to face, respectively, are formed between the cylinder block 13 and the cylinder head 17, and spark plugs 27 ... are fixedly screwed into the cylinder head 17 in such a manner that distal end portions thereof face the combustion chambers 26 ..., respectively.

A primary driving sprocket 31 and a secondary driving sprocket 32 which is larger in diameter than the primary driving sprocket 31 are fixed to an end portion of the crankshaft 11 which is rotationally supported by the crankcase 14. In addition, a camshaft 33 each having an axis parallel to the crankshaft 11 is rotationally supported on the cylinder head 17 in such a manner as to constitute part of a valve train, and a primary driven sprocket 34 is fixed to an end portion of the camshaft 33. Furthermore, a vacuum pump 35 having an rotational axis parallel to the crankshaft 11 and the camshaft 33 is attached to the cylinder block 13, and a secondary driven sprocket 37 is fixed to a rotating shaft 36 of the vacuum pump 35.

A timing chain 38 is wound around the primary driving sprocket 31, the primary driven sprocket 34 and the secondary driven sprocket 37, and rotational force from the crankshaft 11 is transmitted to the rotating shaft 36 of the vacuum pump 35 and the camshaft 33 via the timing chain 38.

Referring to Figs. 3 to 6 as well, a secondary balancer system 40 for reducing secondary vibrations is accommodated within the oil pan 16, and the secondary balancer system 40 includes a balancer housing 41 which is made up by connecting upper and lower housings 42, 43 to each other and driving side and driven side balance shafts 44, 45 which each have an axis parallel to the crankshaft 11, which are interlocked with and connected to each other, and which are rotationally supported on the balancer housing 41.

A tertiary driven sprocket 46, which is a driven wheel, is fixed to an end portion of the driving side balance shaft 44, and a driving chain 47, which is an endless transmission belt, is wound around the secondary driving sprocket 32 and the tertiary driven sprocket 46, whereby both the balance shafts 44, 45 are rotated when the rotational force from the crankshaft 11 is transmitted thereto.

A bow-shaped shoe 48, which is supported on the lower block 15 in such a manner as to swing, is brought into sliding contact with a slack side of the driving chain 47 between the secondary driving sprocket 32 and the tertiary driven sprocket 46, and a tensioner body 50 of a hydraulic tensioner 49 for imparting a certain tension to the driving chain 47 by pressing the shoe 48 to the driving chain 47 side is attached to a pump cover 51, the pump cover 51 being fastened to the lower housing 43 of the balancer housing 41. Namely, the tensioner body 50 of the hydraulic tensioner 49 is attached to the lower housing 43 of the balancer housing 41 via the pump cover 51.

The tertiary driven sprocket 46, a primary journal 44a, a driving gear 44b, a primary balancer weight 44c, a secondary journal 44d and a secondary balancer weight 44e are integrally provided on the driving side balance shaft 44 sequentially in that order at intervals from an end to the other end of the driving side balance shaft 44 along an axial direction thereof (from a left end to a right end as viewed in Figs. 4 and 5) . In addition, a primary journal 45a corresponding the primary journal 44a of the driving side balance shaft 44, a driven gear 4 5b meshing with the driving gear 44b, a primary balancer weight 45c corresponding to the primary balancer weight 44c of the driving side balance shaft 44, a secondary journal 45d corresponding to the secondary journal 44d of the driving side balance shaft 44 anda secondary balance weight 44e corresponding to the secondary balance weight 44e of the driving side balance shaft 44 are integrally provided on the driven side balance shaft 45.

The upper housing 42 and the lower housing 43 are connected together with a plurality of bolts 55 ... in such a manner that the primary journals 44a, 45a and the secondary journals 44d, 45d of the driving side and driven side balance shafts 44, 45 are rotationally supported between the both housings via ring-like metallic bearings 54 ...

A projecting portion 43a which projects from the upper housing 42 is integrally provided on the lower housing 43 at an axial end of the driving and driven balance shafts 44, 45, and a pump body 43b rising upwardly is integrally formed at a distal end portion of the projecting portion 43a on a driven balance shaft 45 side thereof.

A pump cover 51 is fastened to the projecting portion 43a with a plurality of bolts 52 ... which pump cover 51 constitutes a pump housing 57 of an oil pump 56 together with the pump body 43b. A pair of attachment bosses 58, 59 are provided on the balancer housing 44 at the other axial end of the both balance shafts 44, 45, and a pair of attachment bosses 60, 61 are provided on the pump cover 51, whereby the respective attachment bosses 58 to 61 are fastened to the lower block 15 with bolts 62 ...

Thus, one end portion of the driving side balance shaft 44 is such as to rotationally pass through the pump cover 51, and the tertiary driven sprocket 46 is fixed to the protruding end portion of the driving side balance shaft 44 which so protrudes from the pump cover 51.

The oil pump 56 is a trochoid pump and is made up of an inner rotor 63 fixed to one end of the driving side balance shaft 45 which rotationally passes through the pump body 43 and an outer rotor 64 which meshes with the inner rotor 63, the inner rotor 63 and the outer rotor 64 being accommodated within the pump housing 57. A strainer 65, which is immersed in oil stored in the oil pan 16, is attached to a lower portion of the lower housing 43, and the oil pump 56 picks up oil within the oil pan 16 in such a manner that the oil so picked up is filtered by the strainer 65. Thus, oil discharged from the oil pump 56 is supplied to a main gallery (not shown) on the crankcase 14 side via an oil passageway 66 provided in the pump cover 51.

The tensioner body 50 of the hydraulic tensioner 49 is fastened to the pump cover 51 with a plurality of, for example, two bolts 67, 67 from an opposite side to the balancer housing 41.

Referring to Figs. 7 and 8 as well, a lubricating oil passageway 68 for introducing oil between the upper and lower housings 42,43 and the driving and driven side balance shafts 44, 45 is formed in the balancer housing 41 so as to communicate with an oil supply passageway 70 provided in the lower block 15 of the crankcase 14 via an orifice 69, and a tensioner oil passageway 71 for introducing oil to the hydraulic tensioner 49 is provided so as to communicate with the oil supply passageway 70 at a position upstream of the orifice 69.

A common oil groove 72 which communicates with the oil supply passageway 70 provided in the lower block 15 so as to communicate with the main gallery is provided in either of connecting surfaces of the lower block 15 and the upper housing 14 which is connected to the lower housing 15, in this embodiment, in an upper surface of the attachment boss 59 provided on the balancer housing 41, in such a manner as to extend in an arc-like fashion around the periphery of, for example, the bolt 62.

In addition, a lubricating oil passageway forming oil groove 73, which is interrupted at portions where the primary and secondary journal portions 44a, 45a, 44d, 45d of the driving and driven side balance shafts 44, 45 are supported, is provided in either of connecting surfaces of the upper and lower housings 42, 43, in this embodiment, in the connecting surface of the lower housing 43 which is connected to the upper housing 42 in such a manner as to formpart of the lubricating oil passageway 68 between the upper and lower housings 42, 43, and interrupted portions of the lubricating oil passageway forming oil groove 73 are caused to communicate with each other by annular oil grooves 74 ... which are provided in the upper and lower housings . 42, 43 at the portions where the respective journal portions 44a, 45a, 44d, 45d are supported.

Thus, communication bores 75 ... for introducing oil which flows through the oil grooves 74 ... between the metallic bearings 54 ... and the respective journal portions 44a, 45a, 44d, 45d are provided in the metallic bearings 54 ... which are interposed between the primary and secondary journal portions 44a, 45a, 44d, 45d of the driving and driven side balance shafts 44, 45 and the upper and lower housings 42, 43.

In addition, a communicating oil passageway 77 is provided in the upper housing 42 for establishing a connection between an end of the common oil groove 72 and the lubricating oil passageway forming groove 73, and the orifice 69 is press fitted in the communicating oil passageway 77 so as to be interposed along the length thereof.

Additionally, the tensioner oil passageway 71 is such as to be provided in the balancer housing 41 so as to continue to the other end of the common oil groove 73 and includes an oil passageway 78 provided in the upper housing 42 so as to communicate with the other end of the common oil groove 73, an oil groove 79 provided in the connecting surface of the lower housing 43 which connects to the upper housing 42 so as to form an oil passageway which communicates with the oil passageway 78 between the upper housing 42 and the lower housing 43, and oil passageways 80, 82 which are provided in the lower housing 43 so as to establish a connection between the oil groove 79 and the tensioner body 50 of the hydraulic tensioner 49. The tensioner oil passageway 71 is connected to the hydraulic tensioner 49 via an oil passageway 83 provided in the pump cover 51.

Next, the function of the embodiment will be described. The lubricating oil passageway 68 for introducing oil between the upper and lower housings 42, 43 which constitute the balancer housing 41 of the secondary balancer system which is accommodated within the oil pan 16 and the driving and driven side balance shafts 44, 45 is provided in the balancer housing 41 in such a manner as to communicate with the oil supply passageway 70 provided in the lower block 15 of the crankcase 14 via the orifice 69, and the tensioner oil passageway 71 for introducing oil to the hydraulic tensioner 49 is provided so as to communicate with the oil supply passageway 70 at the position upstream of the orifice 69.

Consequently, since oil restricted by the orifice 69 is supplied to the lubrication needing parts between the upper and lower housings 42, 43 and the driving and driven side balance shafts 44, 45, whereas oil is supplied to the hydraulic tensioner 49 via the tensioner oil passageway 71 which is branched at the position upstream of the orifice 69, the effect of a change in the amount of oil consumed on the lubrication needing parts side can be prevented from being imposed on the tensioner 49 side, whereby the stable operation of the hydraulic tensioner 49 can be secured by allowing for the supply of oil whose pressure is substantially as high as that in the main gallery to the hydraulic tensioner 49 at all times.

Moreover, the common oil groove 74 which communicates with the oil supply passageway 70 is provided in either of the connecting surfaces of the crankcase 14 and the upper housing 42 which is connected to the crankcase 14, in this embodiment, in the upper surface of the attachment boss 59 provided on the balancer housing 41, and the lubricating oil passageway forming oil groove 73 for forming the part of the lubricating oil passageway 68 between the upper and lower housings 42, 43 is provided in either of the connecting surfaces of the upper and lower housings 42, 43, in this embodiment, in the connecting surface of the lower housing 43 which is connected to the upper housing 42. Additionally, the communicating oil passageway 77 is provided in the upper housing 42 which passageway 77 establishes the connection between the one end of the common oil groove 74 and the lubricating oil passageway forming oil groove 73 and along which the orifice 69 is interposed, and the tensioner oil passageway 71 is provided in the balancer housing 41 so as to continue to the other end of the common oil groove 74.

According to the oil passageway construction, it is possible to easily construct the lubricating oil passageway 68 which is connected to the oil supply passageway 70 in the crankcase 14 via the orifice 69 and the oil passageway construction in which the tensioner oil passageway 71 is made to communicate with the oil supply passageway 70 at the position upstream of the orifice 69 by connecting the upper and lower housings 42, 43 together.

Thus, while the embodiment of the invention has been described heretofore, the invention is not limited to the embodiment so described and therefore can be modified variously with respect to the design thereof without departing from the sprit and scope of the invention described in the claims thereof.

For example, while, in the embodiment, the tertiary driven sprocket 46 is used as the driven wheel and the chain is used as the transmission belt, the invention can be applied to a secondary balancer system in a pulley is used instead of the sprocket and a belt is used instead of the chain.

## Claims

1. An engine secondary balancer system, comprising:
a balancer housing (41) connected to a crankcase (14) and accommodated in an oil pan (16), the balancer housing (41) including upper and lower housings (42,43) connected to each other;
a pair of balance shafts (44, 45) each having an axis parallel to a crankshaft (11), the pair of balance shafts (44,45) interlocked with and connected to each other, being rotationally supported between the upper and lower housings (42,43), one of the pair of balance shafts (44) having a driven wheel (46) fixed to an end portion thereof;
an endless transmission belt (47) for transmitting rotational power from the crankshaft (11), being wound around the driven wheel (46); and
a hydraulic tensioner (49) for imparting a tension to the transmission belt (47);
wherein the balancer housing (41) is provided with a lubricating oil passageway (68) for introducing an oil between the upper and lower housings (42,43) and the pair of balance shafts (44,45), and a tensioner oil passageway (71) for introducing an oil to the hydraulic tensioner (49); and
the lubricating oil passageway (68) is provided so as to communicate with an oil supply passageway (70) provided in the crankcase (14) via a communicating oil passageway (77) provided with an orifice (69) therein;
**characterised in that**:
the hydraulic tensioner (49) comprises a tensioner body (50) attached to the balancer housing (41); and,
the tensioner oil passageway (71) is provided so as to communicate with the oil supply passageway (70) at a position upstream of the orifice (69) via an oil passageway (78) and a common groove (72) which is branched from the communicating oil passageway (77).

2. An engine secondary balancer system according to claim 1,
wherein the common oil groove (72) communicating with the oil supply passageway (70) is provided in one of connecting surfaces of the crankcase (14) and the upper housing (42) connected to the crankcase (14);
a lubricating oil passageway forming oil groove (73) for forming a part of the lubricating oil passageway (68) between the upper and lower housings (42,43) is provided in at least one of connecting surfaces of the upper and lower housings (42, 43);
the communicating oil passageway (77) is provided in the upper housing (42) which connects one end of the common oil groove (72) and the lubricating oil passageway forming oil groove (73) and along which the orifice (69) is interposed; and
the tensioner oil passageway (71) is provided in the balancer housing (41) so as to continue to the other end of the common oil groove (72).

## Patentansprüche

1. Motorsekundärausgleichersystem, umfassend:
ein Ausgleichergehäuse (41), das mit einem Kurbelgehäuse (14) verbunden ist und in einer Ölwanne (16) aufgenommen ist, wobei das Ausgleichergehäuse (41) ein oberes und ein unteres Gehäuse (42, 43) umfasst, die miteinander verbunden sind;
ein Paar Ausgleichswellen (44, 45), von denen jede eine Achse parallel zu einer Kurbelwelle (11) aufweist, wobei das Paar Ausgleichswellen (44, 45) miteinander gekoppelt und miteinander verbunden ist und drehbar zwischen dem oberen und dem unteren Gehäuse (42, 43) gelagert ist, wobei eine der Ausgleichswellen des Paares Ausgleichswellen (44) ein angetriebenes Rad (46) aufweist, das an einem Ende davon befestigt ist;
einen endlosen Transmissionsriemen (47) zur Übertragung von Drehleistung von der Kurbelwelle (11), der um das angetriebene Rad (46) gewickelt ist; und
eine hydraulische Spannvorrichtung (49), um eine Spannung an den Transmissionsriemen (47) weiterzugeben;
wobei das Ausgleichergehäuse (41) ausgestattet ist mit einem Schmieröldurchgang (68), um ein Öl zwischen dem oberen und dem unteren Gehäuse (42, 43) und dem Paar Ausgleichswellen (44, 45) einzuführen, und einem Spannvorrichtungsöldurchgang (71), um ein Öl zu der hydraulischen Spannvorrichtung (49) zu führen; und
wobei der Schmieröldurchgang (68) so angeordnet ist, dass er mit einem Ölzufuhrdurchgang (70), der in dem Kurbelgehäuse (14) vorgesehen ist, über einen verbindenden Öldurchgang (77), der mit einer Öffnung (69) darin ausgestattet ist, in Verbindung steht;
**dadurch gekennzeichnet, dass**:
die hydraulische Spannvorrichtung (49) einen Spannvorrichtungskörper (50) umfasst, der an dem Ausgleichergehäuse (41) befestigt ist; und
der Spannvorrichtungsöldurchgang (71) so angeordnet ist, dass er mit dem Ölzufuhrdurchgang (70) an einer der Öffnung (69) vorgelagerten Position vermittels eines Öldurchgangs (78) und einer gemeinsamen Nut (72) in Verbindung steht, die von dem verbindenden Öldurchgang (77) abgezweigt ist.

2. Motorsekundärausgleichersystem nach Anspruch 1,
wobei die gemeinsame Ölnut (72), die mit dem Ölzufuhrdurchgang (70) in Verbindung steht, in einer von verbindenden Flächen des Kurbelgehäuses (14) und des oberen Gehäuses (42), das mit dem Kurbelgehäuse (14) verbunden ist, vorgesehen ist;
wobei eine Schmieröldurchgang bildende Ölnut (73) zur Bildung eines Teils des Schmieröldurchgangs (68) zwischen dem oberen und dem unteren Gehäuse (42, 43) in wenigstens einer von verbindenden Flächen des oberen und des unteren Gehäuses (42, 43) vorgesehen ist;
wobei der verbindende Öldurchgang (77) in dem oberen Gehäuse (42) vorgesehen ist, das ein Ende der gemeinsamen Ölnut (72) und die Schmieröldurchgang bildende Ölnut (73) verbindet und entlang dem die Öffnung (69) eingefügt ist; und
wobei der Spannvorrichtungsöldurchgang (71) in dem Ausgleichergehäuse (41) vorgesehen ist, um sich zu dem anderen Ende der gemeinsamen Ölnut (72) fortzusetzen.

## Revendications

1. Système de balancier secondaire de moteur, comprenant :
un boîtier de balancier (41) raccordé à un carter de moteur (14) et logé dans un carter d'huile (16), le boîtier de balancier (41) comprenant des boîtiers supérieur et inférieur (42, 43) raccordés l'un par rapport à l'autre ;
une paire d'arbres d'équilibrage de vilebrequin (44, 45) ayant chacun un axe parallèle à un vilebrequin (11), la paire d'arbres d'équilibrage de vilebrequin (44, 45) étant bloqués avec et raccordés entre eux, en étant supportés en rotation entre les boîtiers supérieur et inférieur (42, 43), l'un de la paire d'arbres d'équilibrage de vilebrequin (44) ayant une roue entraînée (46) fixée à une partie d'extrémité de celui-ci ;
une courroie de transmission sans fin (47) pour transmettre la puissance de rotation provenant du vilebrequin (11), qui est enroulée autour de la roue entraînée (46) ; et
un dispositif de tension hydraulique (49) pour communiquer une tension à la courroie de transmission (47) ;
dans lequel le boîtier de balancier (41) est prévu avec une voie de passage d'huile de lubrification (68) pour introduire une huile entre les boîtiers supérieur et inférieur (42, 43) et la paire d'arbres d'équilibrage de vilebrequin (44, 45), et une voie de passage d'huile de dispositif de tension (71) pour introduire une huile dans le dispositif de tension hydraulique (49) ; et
la voie de passage d'huile de lubrification (68) est prévue afin de communiquer avec une voie de passage d'alimentation d'huile (70) prévue dans le carter de moteur (14), via une voie de passage d'huile de communication (77) prévue avec un orifice (69) à l'intérieur de celle-ci ;
**caractérisé en ce que**
le dispositif de tension hydraulique (49) comprend un corps de dispositif de tension (50) fixé sur le boîtier de balancier (41) ; et
la voie de passage d'huile dé dispositif de tension (71) est prévue afin de communiquer avec la voie de passage d'alimentation d'huile (70) à une position en amont de l'orifice (69) via une voie de passage d'huile (78) et une rainure commune (72) qui est ramifiée à partir de la voie de passage d'huile de communication (77).

2. Système de balancier secondaire de moteur selon la revendication 1,
dans lequel la rainure d'huile commune (72) communiquant avec la voie de passage d'alimentation d'huile (70) est prévue dans l'une des surfaces de raccordement du carter de moteur (14) et le boîtier supérieur (42) raccordé au carter de moteur (14) ;
une voie de passage d'huile de lubrification formant la rainure d'huile (73) pour faire partie de la voie de passage d'huile de lubrification (68) entre les boîtiers supérieur et inférieur (42, 43) est prévue dans au moins l'une des surfaces de raccordement des boîtiers supérieur et inférieur (42, 43) ;
la voie de passage d'huile de communication (77) est prévue dans le boîtier supérieur (42) qui raccorde une extrémité de la rainure d'huile commune (72) et la voie de passage d'huile de lubrification formant la rainure d'huile (73) et le long de laquelle l'orifice (69) est intercalé ; et
la voie de passage d'huile de dispositif de tension (71) est prévue dans le boîtier de balancier (41) afin de continuer vers l'autre extrémité de la rainure d'huile commune (72).
